# EUROPEAN PATENT SPECIFICATION

(11) **EP 4 500 427 B1**
(45) Date of publication and mention of the grant of the patent: **03.12.2025**
(21) Application number: 23717410.7
(22) Date of filing: 27.03.2023
(51) Int. Cl.: G06Q 10/08

(54) **DIGITAL SYSTEM FOR FORECASTING A FUTURE DAMAGE OR LOSS IMPACT ON CARGO OR CARGO LOGISTICS SERVICES AND AUTOMATED ALLOCATING OF A DAMAGE COVER AND METHOD THEREOF**
DIGITALES SYSTEM ZUR PROGNOSE EINER ZUKÜNFTIGEN SCHÄDEN- ODER VERLUSWIRKUNG AUF FRACHT- ODER FRACHTLOGISTIKDIENSTLEISTUNGEN UND AUTOMATISIERTE ZUTEILUNG EINER SCHADENERSATZDECKUNG UND VERFAHREN HIERFÜR
SYSTEME NUMERIQUE DE PREVISION D'UN DOMMAGE FUTUR OU D'UN IMPACT DE PERTE SUR DES SERVICES DE FRET OU DE LOGISTIQUE DE FRET ET ATTRIBUTION AUTOMATISEE D'UNE COUVERTURE DE DOMMAGES ET PROCEDE ASSOCIE

(30) Priority: 25.03.2022 CH 3342022
(43) Date of publication of application: 05.02.2025
(73) Proprietor: Swiss Reinsurance Company Ltd., 8022 Zürich (CH)
(72) Inventor: VACCANI, Sergio, 8008 Zürich (CH); TANZI, Andrea, 8712 Stäfa (CH)
(74) Representative: Leimgruber, Fabian Alfred Rupert
(86) International application number: PCT/EP2023/057825
(87) International publication number: WO 2023/180581

(56) References cited:
- CN-A- 106 448 215
- US-A1- 2005 171 870
- US-A1- 2021 082 220

## Description

### Field of the Invention

The present invention relates to methods and systems for forecasting and/or allocating and/or measuring risk measures associated with cargo logistics causing a potential damage to cargo handled by the cargo logistics. Cargo denotes goods, carriage/load of goods or freight to be transported, where cargo logistics denotes the flow or transportation of goods between the point of origin and the point of target or destination typically allocated with specific transportation requirements and conditions as time, type of transportation and/or type of transition. The resources or goods transported or handled in logistics, i.e. logistic process, may include tangible goods such as materials, equipment, and supplies, as well as food and other consumable items. In particular, the present invention relates to digital automated systems and methods for measuring and/or predicting risk measures for an occurrence of an event impacting on cargo logistics and cargo logistics services causing a negative, physical and measurable impact, i.e. damage or loss, on the cargo and/or the cargo logistics services. In particular, it relates to digital systems measuring and/or generating risk measures for automated cargo loss coverage or risk-mitigation systems.

### Background of the Invention

Cargo logistics and/or cargo transportation provide an interface between cargo owners, cargo carrier entities and regulatory bodies. They are the backbone of a functioning global supply chain and as such provide a variety of different services. For example, cargo logistics include transportation for pickup of cargo from a cargo owner, cargo sorting, labelling, packing, palletization, customs clearance, selecting the most suitable transportation means and channel, booking of space with a cargo carrier, loading cargo onto the transportation means, providing updates about the shipment status at regular intervals, and arranging a destination delivery process which may include customs clearance and other formalities. Every type of cargo, every transportation means, channel and route, and every country have their own unique set of issues in the process of the cargo logistics services. Besides technical and infrastructural deficiencies for example related to transportation means, road, rail and port networks or seasonal weather implications, there are cargo specific complications like fragile products or hazardous materials. There are administrative and legal complications like non-compliance with work processes or regulations, strikes, regulatory bottlenecks, embargos, health lockdowns, etc. Natural catastrophes, like floods, strong winds, earthquakes or fires, may have a significant impact on all aspects of cargo logistics services. These deficiencies and incidences may result in diverse damages to the cargo or to the cargo logistics services resulting in cargo delay, damaging or loss.

Examples for incidents causing damage to the cargo or the cargo logistics services are:
- Total loss of cargo - may happen either due to physical cargo damaging by an impact event or theft while in custody of the cargo logistics services provider and freight forwarder, respectively, and cargo carrier.
- Damaging of cargo - may happen either due to incorrect or improper packaging of the cargo, incorrect or improper handling of the cargo while in the custody of the cargo logistics services provider and cargo carrier.
- Rerouting of cargo - may happen if documentation submitted to the cargo carrier by the cargo logistics services provider was incorrect and cargo ended up at another destination.
- Delays of cargo - may happen either due to weather impacts, political disruptions or administrative failures for example due to improper documentation like receipt of cargo at the destination was delayed due to incorrect cargo declarations filed with customs or any other types of cargo documentation required for the transportation.

Cargo owners rely on the cargo logistics services provider and will hold them liable for picking up the cargo, arranging for proper packaging, handling all the documentation, clearances en-route and delivering it to the receiver at the final destination, at the right price and in the same condition that it is picked up from origin using the most suitable transportation mode and routes possible.

Therefore, a cargo logistics services provider needs to have or be sufficiently insured for example with full liability protection to cover all forwarding operations, third party liabilities, regulatory breaches, errors & omissions and legal liability (all providers may be exposed to contractual liability for a loss, irrespective of who is responsible), survey and mitigation costs, recovery and remediation costs, and salvage charges including cargo disposal. In summary a comprehensive risk management and liability coverage is needed that is appropriate for a defined cargo logistics services package and that allows for competitive pricing of the package. Therefore, insurance policy underwriters of various insurance providers are briefed on the terms and conditions of the cargo logistics services package so that they can customize insurance policy and premiums. As a result, there are many risk cover packages and various insurance providers, which results in tedious processes to receive and compare different packages and decide for the best cover and best pricing.

This is addressed in the state of the art as known for example from US 2002/0169710 A1. A system for negotiating logistics and risk-transfer transactions includes interfaces for connecting logistics providers, insurance providers, and e-marketplaces. An agent software module is configured to search the internet for pricing information that is used to maintain a current database of pricing and terms. The e-marketplaces allow purchasers to enter descriptions of items to be shipped and insured. The system may then search the current database to provide the purchaser with a quote for freight and insurance services.

A system providing a metric structure for various objects, including transportation systems is shown in WO 2011/079324 A2. In particular, the metric structure may be used for a broad range of applications, such as assessing and controlling insurance risk, determining insurance premiums, prioritizing tasks, travel, navigation, advertising, and other purposes.

A transportation insurance system is disclosed in CN106448215A, where upon detecting a vehicle insurance claim, the current location of the vehicle is assessed for car insurance service. Further, a transport line and intersections within a preset distance from the current position is determined, and information about the vehicle insurance claiming events is captured which are related to the transport line and the intersections and occurrence within a preset time in the past. Based on the information, the compensation pay-out is generated due to traffic accidents on each road section of the transport line.

CN113298663A discloses a dynamic pricing system for a logistics transportation platform. The system performs the steps of (i) achieving the pricing of a basic price of a future insurance premium through a convex combination average method and an expectation function method based on the historical loss data of a logistics transportation platform; (ii) establishing a reward and punishment system: classifying target objects by utilizing a clustering algorithm, and further realizing pricing of future insurance premium based on differentiated prices of the target objects; and (iii), determining a price adjustment period, and repeating the step (i) and the step (ii) so as to achieve dynamic adjustment of the future insurance premium price.

The document US 2021/0082220 A1 shows a system for monitoring and managing loading docks and facility operations. The system comprises a data analyzer to monitor first data indicating whether a truck trailer is present at a dock of the material handling facility, and to monitor second data indicating a condition associated with a door at the dock. The second data are different than the first data. A notification generator generates a notification based on the first data and the second data. In this context, loading docks provide an area for vehicles (e.g., trucks, trailers, etc.) to move next to an elevated platform of a building (e.g., a material handling facility) so that cargo can be readily transferred between the vehicle and the building. Some loading docks include equipment such as dock levelers, vehicle restraints, and/or dock doors, any of which can be associated with one or more sensor/monitoring systems. Within material handling facilities there can be additional equipment to facilitate the movement, storage, and/or handling of cargo such as, for example, grade-level doors, HVAC (heating, ventilation, and air conditioning) systems, industrial doors to partition freezer rooms and/or other rooms, conveyor systems, fans for air movement within the facility, lighting, and signal systems, etc. Further, US 2005/0171870 A1 discloses a distribution management system applicable for the delivery of ordered cargo to a destination. The system comprises with a database server. The internal processing section of the database server comprises a shipping instruction processing section for instructing the delivery of the ordered cargo to the destination including a physical distribution trader, a physical distribution expense calculation processing section for calculating physical distribution expenses necessary for the delivery of the cargo to the destination, and a cargo tracking processing section for indicating the delivery status of the cargo. The distribution management system automatically manages the cargo so that all of shipping instruction concerning the cargo can be transmitted to the physical distribution trader simply by accessing a portal site. Finally, CN106448215A discloses an automated vehicle insurance claim warning system. When detecting a vehicle insurance claiming warning instruction, the system gets the current location of a vehicle for car insurance service and gets a transport line and intersections within a preset distance from the current position and gets information about vehicle insurance claim events which are related to the transport line and the intersections and happened within a preset time in the past. The system calculates the compensation pay-out generated due to traffic accidents on each road section of the transport line and at each intersection according to the vehicle insurance claiming event information and takes the road sections of the transport line and/or the intersections, which meet the condition that the compensation pay-out generated due to traffic accidents is greater than a preset amount of money, as risk areas. The system outputs warning information corresponding to the risk areas.

In summary, the prior art concepts focus on individual aspects of transportation logistics, price development and risk controlling. However, the known concepts cannot provide a holistic procurement of cargo logistics services considering related risks and including optimized insurance risk processing.

### Summary of the Invention

It is one object of the present invention to provide a digital system and method for forecasting, allocating and/or measuring risk measures for cargo logistics being affected by a potential damage to cargo handled by the cargo logistics process that allow for transparency around cargo shipping, automated access to comprehensive and reliable cargo loss and/or damage coverage, transparent booking and quoting processes for cargo logistics services and simple and convenient interaction with logistics services providers and insurance providers. In particular, it is an object of the present invention to provide digital methods and systems for allocating and/or predicting risk measures for an occurrence of an impact event on cargo logistics services that provide automation for risk analysis and/or measurement of cargo liability risks related to cargo logistics services, allow for standardized risk coverage and rapid digital end-to-end risk management. In particular, it is an object of the present invention to provide digital methods and systems measuring and/or generating risk measures for logistics procurement platforms and cargo insurance systems.

According to the present invention, these objects are achieved particularly through the features of the independent claims. In addition, further advantageous embodiments follow from the dependent claims and the description.

According to the present invention, the above-mentioned objects are particularly achieved by the inventive digital system and method for a digital system for predicting and measuring risk measures for an occurrence of an impact event impacting physical loss or damage on cargo or cargo logistics services having an impact with a measurable impact strength related to an impact type on the cargo or the cargo logistics services, the impact strength being quantified by measuring an impact severity or intensity and an impact duration and/or an impact frequency, in that sets of measurable cargo logistics parameters are captured by the system as logistics input signals from a cargo logistics services database via a data interface and transmitted to an allocation structure of a processing unit, each set of measurable cargo logistics parameters at least comprising parameters defining the cargo or parameters or defining the logistics services, the set of measurable cargo logistics parameters at least comprises cargo parameter values capturing cargo characteristics including cargo weight and/or cargo size and/or cargo fragility and/or cargo value, and logistics parameter values capturing logistics characteristics including cargo packaging design and/or departure location characteristics and/or destination location characteristics and/or transportation channel characteristics and/or transportation means, wherein the cargo and logistics parameters are at least partially detected and transmitted by tracking devices comprising RFID chips or telematic devices or GPS sensors installed at the cargo, the tracking devices measuring parameter values for geo location of the cargo, the orientation of the cargo or the velocity of the cargo and transmitting them via a data transmission network to the cargo logistics services database, in that at least one risk factor indicating a measured impact probability for the cargo or the cargo logistics services is generated by a risk modelling structure of the processing unit based on at least the measured parameter values of the impact strength and/or impact types and/or measured quantified damages and provided for the allocation structure of the processing unit, each of the risk factors at least corresponds to a measured impact strength or impact type of a negative impact on the cargo or the cargo logistics services, or a quantified damage at the cargo or on the cargo logistics services resulting from the impact, and in that an aggregated risk measure for the cargo or cargo logistics services is automatically generated by an aggregating structure of the processing unit based on the at least one risk factors allocated to measurable cargo logistics parameters of the set of measurable cargo logistics parameters, and is provided as output signal by a signal generator to predict an occurrence of a measurable negative impact on the cargo and/or the cargo logistics services.

In summary, the digital system for providing risk measures for an occurrence of a harmful impact event on cargo logistics services handling the cargo and/or on the cargo itself according to the invention for implementing the above described method is designed to receive the set of measurable cargo logistics parameters from the cargo logistics services database, find at least one risk factor quantifying the risk of occurrence of such an impact event related to the measurable cargo logistics parameters, and generating a combined risk measure to predict the probability and preferably also the severity of the occurrence of the impact event.

The measurable cargo logistics parameters are captured by the cargo logistics database for example when a cargo owner and a provider of cargo logistics services define the cargo that has to be shipped and define the details of the shipping mode, i.e., the cargo logistics services. The measurable cargo logistics parameters can be any type of measurable value or technical characteristics of a cargo to be shipped or defining a service aspect of the logistics services to ship the cargo. As such the measurable values or technical characteristics can be captured by physical measurands and they define the cargo characteristics and/or the logistics characteristics. In one variant of the method the set of measurable cargo logistics parameters at least comprises cargo parameter values capturing cargo characteristics for example including cargo weight, cargo size, cargo fragility and/or cargo value, and/or logistics characteristics for example including cargo packaging design, departure location characteristics, destination characteristics, transportation channel characteristics, and/or transportation means.

Particularly, cargo parameters capture the weight and size of the cargo for example measured by a cargo measuring device like a scale or a size detector, the material and manufacturing of the cargo may for example be identified by measuring sensors to determine fragility of the cargo or the packaging design protecting cargo from being damaged. Logistics characteristics my capture services parameters about the length of a cargo route, e.g., measured by using a geographic information system, parameters about departure locations and port of entry, and the performance of transportation means indicated for example in average speed or fuel consumption, etc. The cargo may for example be provided with an identification means like an RFID tag or telematic devices providing and transmitting measurable cargo logistics parameters of the cargo for simple read out by a reading device transmitting the measured parameters to the cargo logistics services database.

The method for allocating and/or predicting risk measures for an occurrence of an impact event on cargo logistics services causing a negative impact with a measurable impact on the cargo and/or the cargo logistics services in one example variant uses risk factors based on historical data for measurable cargo logistics parameters as mentioned above. Advantageously, the aggregated risk measure is determined based on such existing or past measures of risk parameter values for one or more cargo logistics parameters defining the cargo logistic services. Thus, the output signal is indicative of the aggregated risk measure for the cargo logistic services in respect to the set of measured values for the cargo logistics parameters. For example, in a basic variant of the method according to the invention, the allocation structure assigns a risk factor to a measurable cargo logistics parameter by: (1) receiving a measured cargo logistics services parameter defining the cargo logistics services or the cargo from the cargo logistics services database via the logistics input signal, (2) selecting at least one risk factor provided by the risk factor database via the risk input signal for an at least similar cargo logistics parameter indicating a damage probability measure based on past measured damages caused by past measured impact events related to the value of the cargo logistics parameter, and (3) allocating the at least one risk factor to the measured cargo logistics services parameter defining the cargo logistics services.

In one variant of the method according to the invention at least one risk factor is based on measurable risk parameters indicating the negative impact or the type of impact on the cargo and/or the cargo logistics services caused by the impact by indicating a damage in form of a delay of the cargo, damaging of the cargo and/or loss of the cargo. In one example, at least one risk factor is based on measurable risk parameter values capturing a time of delay (e.g., compared to an estimated time of delivery), a quantified damaging extend and/or a loss of the cargo. A risk factor for an associated cargo logistics parameter can for example be established by measuring the physical impact strength or impact type of impact events on the cargo and/or the cargo logistics services affected by the impact event, measuring the impact strength on the cargo or the cargo logistics services, measuring a damage of the cargo and/or the cargo logistics services caused by the impact event, and/or quantifying a probability of impact occurrence.

The risk factors are for example based on measured data parameters of cargo logistics services or of cargo that had been impacted by a negative impact event in the past. For these past impact events the measured cargo logistics parameters and the corresponding damage to the cargo logistics services and/or the cargo are recorded as historical data. The historical data indicates the measured impact strength or impact type of a negative impact on the cargo and/or on the cargo logistics services, and/or a quantified damage at the cargo and/or on the cargo logistics services resulting from the negative impact. In particular, the historical data my indicate a strength of a storm, the temperature and location at the time of the impact, the delay time with respect to an estimated time of delivery on a specified transportation route, the type of impact for example in form of dropping the cargo by a specified cargo lifting device at a specified location, crushing the cargo in a specified cargo storage means, loss of the cargo on a specified route using a specified transportation means, theft or piracy on a specified transportation route at a specified location, delay time of processing cargo formalities in specified departure locations and at specified ports of entry, etc.

The historical data serves as the basis for statistical analysis to quantify the probability of a negative impact on cargo logistics services and/or on cargo that is defined by a measured cargo logistics parameter. The quantified probability is represented by the risk factor for the measurable cargo logistics parameter. In one variant of the system and the method according to the invention the processing unit and/or the risk factor database may include a damage or risk modelling structure, which generates the risk factor for a measurable cargo logistics parameter based on a measured impact strength or impact type and/or a measured quantified damage. The damage or risk modelling structure may use the historical data to assess the impact risk based on technical measurands. The risk factor database stores risk factors for a wide range of measurable cargo logistics parameters.

The allocation structure of the processing unit receives the set of measurable cargo logistics parameters defining selected logistics services for a specified cargo. Further, the allocation structure captures at least one risk factors, preferably a set of risk factors, from the risk factor database, which risk factors correspond to these cargo logistics parameters and the measured value of the cargo logistics parameter. Preferably, the allocation structure assigns a risk factor to each of the parameters of the set of measurable cargo logistics parameters. Ideally, the measured cargo logistics parameter that served as the basis to determine an associated risk factor is equal to the cargo logistics parameter defining the cargo logistics services to which the risk factor is assigned. However, small deviations between the historical cargo logistics parameters serving as basis for determining the risk factor and the cargo logistics parameters defining the present cargo or cargo logistics services can be neglected, particularly if they are statistically insignificant. Significant deviations can be taken into account by adjusting the risk factor, for example by including an uncertainty factor or weighing factor. For example, the damage or risk modelling structure may determine the uncertainty factor based on regression analysis.

The at least one risk factor or the set of risk factors assigned to the cargo logistics services is captured by the aggregating structure of the processing unit, which automatically generates the aggregated risk measure for the cargo logistics services to predict an occurrence of a measurable negative impact on the cargo and/or the cargo logistics services. The aggregated risk measure is provided as the output signal by a signal generator.

The digital system serves as a forecasting module or device to indicate the likelihood of a negative impact on the defined cargo or cargo logistics services in questions. The aggregated risk may be used for example for decision making about cargo processing, services pricing or insurance coverage. The system and method providing the aggregated risk measure support transparent and reliable risk management for the cargo to be shipped, insurance policies can be drafted in real-time providing fast and convenient interaction with insurance providers. Comparison between different cargo logistics services packages, each defined by a different set of measurable cargo logistics parameters, is made quick and easy, which helps optimizing cargo logistics services.

In one variant of the method according to the present invention, the aggregated risk measure is assigned to the set of measurable cargo logistics parameters by the allocation structure and provided as extended output signal to the cargo logistics services database by the signal generator via a data interface. The aggregated risk measure itself is part of the set of measurable cargo logistics parameters in real time and may serve as the basis for quoting, booking, pricing and scheduling the cargo logistics services.

In summary, the aggregated risk measure is generated by the aggregating structure and can be allocated to the set of measurable cargo logistics parameters, the aggregated risk measure providing an aggregated impact probability measure value for the cargo logistics services to be involved in one or more impact events having a negative impact with a measurable impact strength.

In one example variant the cargo logistics services are managed by a digital logistics procurement platform comprising the cargo logistics services database with the cargo logistics services parameters for providing online services for cargo owners and cargo logistics providers. The logistics procurement platform for example allows for coordinating service availabilities, scheduling services, collecting customer data, providing information, drafting service quotes, tracking of the cargo, etc. The digital system can be implemented as a forecasting module into the digital logistics procurement platform. For example, the system can be a plug-in or add-on module that is implemented to the logistics procurement platform by a plug-in interface. With the forecasting module the platform can serve as an end-to-end logistics services procurement tool with fully integrated insurance value proposition, which simplifies the customer journey to a one-stop-shop that addresses all customer needs of a cargo owner. The cargo logistics services provider profits from real-time insurance propositions for his cargo logistics services to be included in his quoting and booking offers.

In a simple version of the system and the method according to the invention an aggregated loss risk measure indicating a loss of the cargo by the cargo logistics services is generated based on the risk factors associated to the measured cargo logistics services parameter by the aggregating structure. The aggregated loss risk measure may be automatically generated by aggregating structure based on a subset of risk factors for measurable cargo logistics parameters that predict the complete loss of the cargo while processed by services of a cargo logistics services package defined by a set of measurable cargo logistics parameters. The aggregated loss risk measure may be provided in addition to the aggregated risk measure as additional risk assessment.

In a still further variant of the system and the method according to the invention at least one risk factor is based on measurable risk parameters indicating a damage in form of damaging of goods other than the cargo being shipped by the cargo logistics services. Such goods are for example other cargo units for example shipped by the same cargo logistics service, e.g., the cargo handling or transportation means shipping the cargo, or such goods are property at the departure or destination location or in-between. Such goods can also be represented by general common goods like air, water, or land. These goods may be damaged by emissions caused by the cargo logistics services or by exploitation for providing the cargo logistics services. The risk parameters may for example be based on measurement values of carbon dioxide emissions caused by the transportation means or environmental impact measures indicating exploitation of land or sea.

In a still further variant of the system and method for allocating and/or predicting risk measures for an occurrence of an impact event on cargo logistics services causing a negative impact according to the invention the processing unit may comprise an optimization structure for optimizing the set of measurable cargo logistics parameters for a cargo logistics service to minimize the probability of the occurrence of an impact event on the cargo logistic service indicated by the aggregated risk measure. For example, the optimization structure comprises an optimization algorithm based on combinatorial optimization to find the combination of cargo logistics services parameters with the lowest aggregated risk measure. For example, the optimization structure receives cargo logistics services characteristics from the logistics input signal and a set of risk factors for one or more of the cargo logistics services characteristics from the risk factor database. The optimization structure selects the cargo logistics parameter comprising the lowest risk factor for each cargo logistics services characteristic and combines the lowest risk cargo logistics parameters to define the set of measurable cargo logistics parameters determining the cargo logistics services package. The lowest risk factor is for example defined by the lowest physical impact strength of impact events on the cargo and/or the cargo logistics services affected by the impact event, a lowest impact strength on the cargo or the cargo logistics services, a lowest damage of the cargo and/or the cargo logistics services caused by the impact event, and/or a lowest probability of impact occurrence. For example, the cargo owner intends to deliver a fragile cargo item from a departure point to a destination in a given maximum time period. The optimization structure can be configured to evaluate and indicate the transportation means and transportation route and the packaging design for this transportation mode such, that the set of cargo logistics services parameters comprises the lowest possible aggregated risk measure.

In an even further variant of the system and method according to the invention the aggregation structure and/or the optimization structure may be combined with an appropriate artificial intelligence structure comprising a machine learning algorithm. For example, a supervised algorithm may be used to group risk factors of the cargo logistics services parameters to determine a minimized aggregated risk measure. Also, a transfer learning algorithm may be used to improve the aggregation of risk factors or optimize the selection of cargo logistics services parameters for a given service package.

The digital system and method for allocating and/or predicting risk measures for an occurrence of an impact event on cargo logistics services causing a negative impact on the cargo and/or the cargo logistics services according to the invention provides simple and fast access to a reliable and quantified risk assessment for cargo owners and logistics providers. The aggregated risk measure provides the foundation for insurance services at all levels. The digital system can be implemented in existing logistics platforms for easy access to logistics providers. It allows for seamless and integrated risk assessment and insurance solutions at the point of sale of logistics services. The cargo logistics services are summarized by the output signal, which includes the set of logistics parameters defining the logistics services package and the aggregated risk measure defining insurance options for the package. Such insurance orchestration ensures price competition without complexity of choice for the cargo owner or services provider. Therefore, the cargo owner has significantly lower effort and costs to fulfil contractual obligations towards cargo recipients. The logistics services providers offer excellent logistics services including insurance costs provision. The logistics services are improved with respect to minimized risks and cargo damage, timelines and quality. The lower service effort to provide insurance options frees up capacity for client servicing. The systematic insurance provision generates additional resource availability and allows for efficient policy issuance and claims management.

### Brief Description of the Drawings

The present invention will be explained in more detail below relying on examples and with reference to these drawings in which:

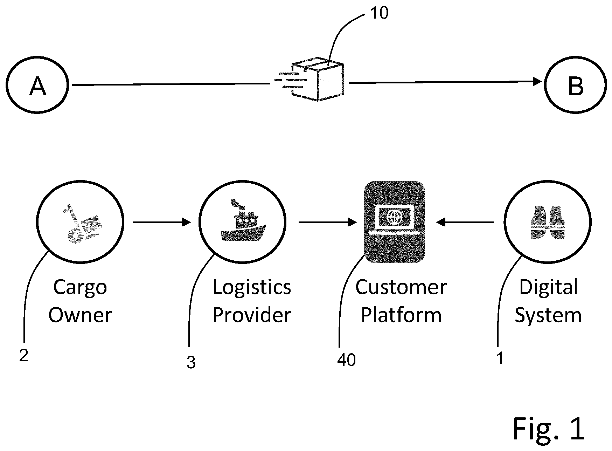

Figure 1 shows a first flow diagram of a first variant of a method for a digital system for allocating and/or predicting risk measures for an occurrence of an impact event on cargo logistics services causing a negative impact with a measurable impact on the cargo and/or the cargo logistics services according to the present invention.

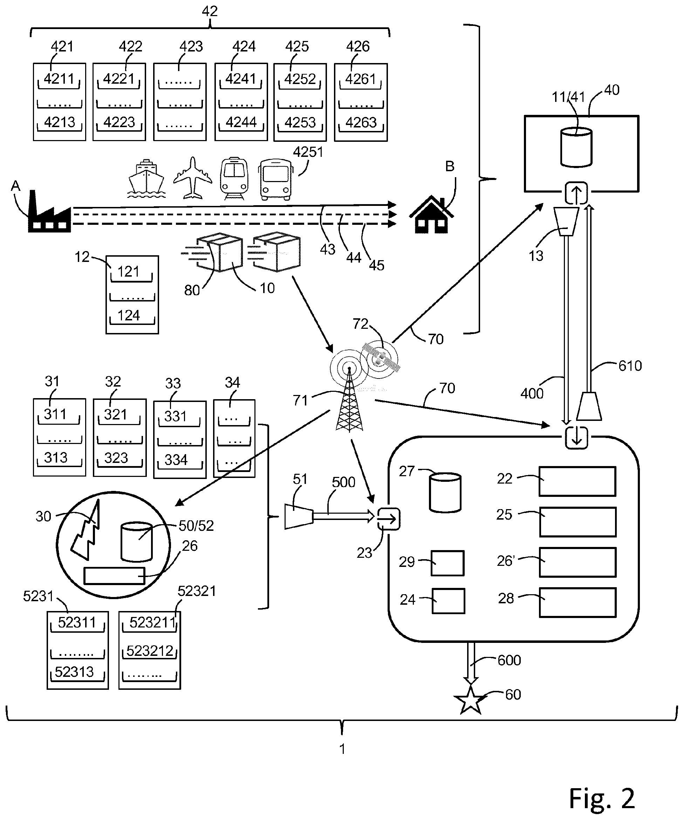

Figure 2 shows a block diagram illustrating an exemplary digital system for allocating and/or predicting risk measures for an occurrence of an impact event on cargo logistics services causing a negative impact with a measurable impact strength on the cargo and/or the cargo logistics services according to the present invention.

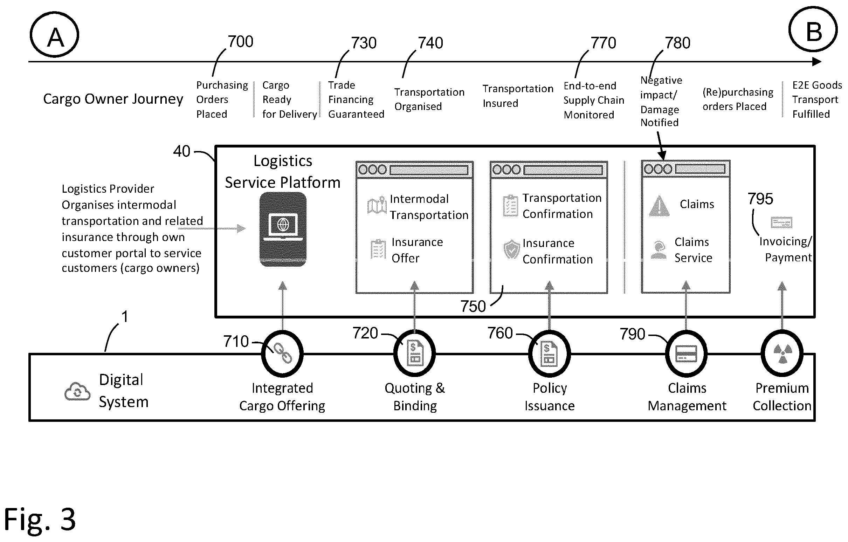

Figure 3 shows a second flow diagram of a further variant of a method for a digital system for allocating and/or predicting risk measures for an occurrence of an impact event on cargo logistics services causing a negative impact with a measurable impact on the cargo and/or the cargo logistics services according to the present invention.

### Detailed Description of the Preferred Embodiments

Figure 1 schematically illustrate an architecture for a possible implementation of an embodiment of the inventive digital multi-channel platform 1 based on a multi-channel, high-layer data-transfer structure 1113 accessible by means of web-client applications 121 running on front-end network-enabled devices 12 providing discrete high-layer data-flow and capturing of structured 1121 and unstructured 1122 data content transferred from the front-end network-enabled devices 12 over a data transmission network 13 to a digital multi-channel back-end system 11.

Figure 1 illustrates the underlying concept of a cargo logistics process and cargo flow by transporting and/or shipping cargo 10 from a departure point A to a destination point B. A cargo owner 2 places an inquiry for shipping the cargo from departure point A to destination point B with a logistics provider 3. The cargo owner 2 can be a manufacturing company producing the cargo goods, a warehouse distributing cargo goods, a private party or any other entity who wants to ship the cargo. The logistics provider 3 for example is a freight forwarder that manages all cargo logistics services required to safely transport the cargo 10 from departure point A to destination point B within a given timeframe. The logistic services of cargo shipping encompass the execution of all necessary activities involved in transporting the cargo, which ranges from cargo pick up at the departure point, packaging, transportation operations, keeping track of the cargo throughout its journey, delivery to the destination point, arranging cargo insurance, as well as services for logistics quoting, booking, scheduling, alerting, controlling and/or processing cargo formalities. The cargo logistics services can be defined by measurable cargo logistics parameters 11 as will be explained in more detail below.

Most cargo logistics providers maintain a digital logistics procurement platform 40 or customer portal for managing information, documentation and data around the cargo logistics services for shipping the cargo 10 from A to B. The procurement platform 40 may be realized as a computer-based internet application or as a software network on site of the logistics provider 3 or any other digital application that allows for receiving, storing, processing and transmitting data. The procurement platform 40 may comprise or be connected to a cargo logistics services database 41storing measurable cargo logistics parameters 11 of the logistics services offered or provided. As shown in Figure 1, a digital system 1 is implemented or connected to the logistics procurement platform 40 for example using an application programming interface (API) architecture. The digital system 1 is designed as a digital system for allocating and/or predicting risk measures for an occurrence of an impact event on cargo logistics services causing a negative impact 30 on the cargo and/or the cargo logistics services according to the present invention. The digital system 1, which is explained in more detail in Figure 2, provides aggregated risk measures 60 as a basis for risk management services like insurances for the cargo logistics services. Thus, the platform can represent a single point-of-sale for logistics and insurance services, as such the platform serves as a digital touchpoint for all services around cargo logistics.

Figure 2 illustrates the digital system 1 and a method for the digital system 1 for allocating and/or predicting risk measures for the occurrence of an impact event on cargo logistics services causing the negative impact 30, which can be defined by a measurable impact strength 31 or an impact type 32 on the cargo 10 and/or on the cargo logistics services according to the invention. The digital system 1 comprises a processing unit 20 and at least one data interface 21 associated with data access means to the cargo logistics services database 41 for capturing sets 13 of measurable cargo logistics parameters 11 as logistics input signals 400 from the cargo logistics services database 41. The sets 13 of measurable cargo logistics parameters 11 are transmitted to an allocation structure 22 of the processing unit 20. Each set 13 of measurable cargo logistics parameters 11 at least comprises one or more cargo parameters 12 defining the cargo and/or one or more logistics parameters 42 defining the cargo logistics services.

The system 1 comprises at least one data interface 23 associated with data access means to a risk factor database 50 for capturing at least one risk factor 52, preferably a set of risk factors 51, indicating a quantified/measured negative impact risk for the cargo 10 and/or the cargo logistics services as risk input signals 500 from the risk factor database 50. The at least one risk factor 52 or the set of risk factors 51 are provided to the allocation structure 22 of the processing unit 20. Each of the risk factors 52 at least corresponds to the measured impact strength 31 or impact type 32 of a negative impact 30 on the cargo 10 and/or on the cargo logistics services, and/or to a quantified damage 33 at the cargo 10 and/or on the cargo logistics services resulting from the negative impact 30. At least one measurable cargo logistics parameter 11 of a set 13 of measurable cargo logistics parameters is assigned a risk factor 52 by the allocation structure 22 that corresponds to the measured value of the measurable cargo logistics parameters 11.

Further, the digital system 1 comprises a signal generator 24 and an aggregating structure 25 for automatically generating an aggregated risk measure 60 for the cargo logistics services based on the at least one risk factor 52 or the set of risk factors 51 allocated to measurable cargo logistics parameters 11 of the set 13 of measurable cargo logistics parameters 11. The aggregated risk measure 60 is provided as output signal 600 by the signal generator 24 to predict an occurrence of a measurable negative impact 30 on the cargo 10 and/or the cargo logistics services. Thus, the aggregated risk measure 60 represents a quantified risk value that can be used for decision making and insurance purposes.

The digital system 1 and the method of the invention provide an end-to-end cargo insurance system integratable into the logistics services procurement platform 4 allowing to provide a one-stop-shop for customers seeking logistics services procurement. The invention allows to provide a holistic logistics services portal covering all aspects needed to offer, book, schedule and manage logistics services, for example comprising (a) online service availability and scheduling, (b) instant digital quoting and booking for the logistics services including appropriate risk coverage, (c) simple and standardized all risks coverage, (d) immediate digital insurance certification and underwriting, and (e) fully automated, digital claims management. The digital system 1 may be provided to the logistics procurement platform 40 of the logistics service provider 3 for example via API services, allowing the logistics service provider to integrate and exploit the method according to the invention easily into its existing platform. At the same time an insurance provider receives all required information about the cargo logistics services to provide an insurance cover package and quoting thereof. Thus, the logistics service provider 3 may act as a digital distribution partner for the insurance provider and provide risk-transfer access for transportations to customers through its logistics services provider platform 40.

In one embodiment of the digital system 1 the cargo logistics services database 41 and/or the risk factor database 50 may comprise a persistent data storage storing data of the measurable cargo logistics services parameters 11 and/or the risk factors 52. The processing unit 20 may have a database 27 for at least temporarily storing parameter data or risk factors for processing and further transmission. Additionally or alternatively, the processing unit 20 can for example be connected via a data transmission network 70 or data transmission line, e.g., comprising a cellular mobile network 71 and/or a satellite transmission line 72 to the logistics procurement platform 40 and/or the risk factor database 50.

As illustrated in Figure 2 the cargo 10 and the cargo logistics services are defined by cargo characteristics and logistics characteristics, which are determined by measurable parameter values of the cargo parameters 12 and the logistics parameters 42. For example, the cargo 10 intended to be shipped is defined by measured values for the cargo parameters 12 for example indicating parameter values capturing cargo weight 121, cargo size 122, cargo fragility 123 and/or cargo value 124. Of course, further cargo characteristics may be determined by further cargo parameter values. The cargo logistics services for shipping the cargo 10 are defined by measured logistics parameter values for example capturing cargo packaging design 421, departure location characteristics 422, destination characteristics 423, transportation channel characteristics 424, transportation means characteristics 425 and/or logistics formalities 426. Parameter values for the cargo packaging design 421 may for example capture packaging material 4211, packaging thickness 4212, packaging quality 4213, and other packaging parameter values. Parameter values for the departure location characteristics 422 may for example capture geographical location 4221, infrastructure connectivity 4222, traffic volumes 4223, crime density and further values. Destination location characteristics 423 may capture similar parameters as the departure location characteristics. The transportation channel characteristics 424 may capture cargo and logistics parameter values for example each of several alternative transportation routes. For example, the cargo could be transported via an air transportation route 43, a sea transportation route 44 or a land transportation route 45. The transportation channel characteristics 424 may capture for example a length of the route 4241, the number of transits 4242 on the route, expected weather conditions 4243, infrastructure conditions 4244, etc. Parameter values for the transportation means 425 may capture a transportation means type 4251 like ship, plane, train or truck, the fuel efficiency 4252 of the transportation means, the age 4253 of the transportation means, etc. Parameter values for the logistics formalities 426 may capture parameter values for a type of required regulatory process 4261, a number 4262 of required regulatory processes, average processing times 4261 of a regulatory process and further related parameter values.

The risk factors 52 indicating a quantified or measured negative impact risk for the cargo 10 and/or the cargo logistics services are derived from measured parameter values quantifying the characteristics of the impact like the impact strength 31 or the impact type 32 of a negative impact 30 on the cargo 10 and/or the cargo logistics services, and/or a quantified damage 33 at the cargo10 and/or on the cargo logistics services resulting from the negative impact 30. The impact type 32 can for example be captured by classifying the negative impact 30 as a natural catastrophe 321 like a storm impact or flood impact, a labor disruption 322 like a strike or health emergency, an administrative or regulatory discontinuation 323 or other types of negative impacts. The parameter values representing an impact strength 31 relate to the impact type 32. However, the impact strength 31 may for example reliably be quantified and measured by capturing an impact severity or intensity 311 like a storm force or flood height, an impact duration 312 like an average duration of a strike at a cargo transit point, and an impact frequency 313 like an incidence of administrative discontinuations e.g., for over-booking of a transportation means or late arrival of transport documents. The quantified damage 33 caused by an impact event 30 is determined by parameter values for example indicating the damaging that the cargo suffers cargo from the impact 30 for example by measuring a downtime 331 of the cargo caused by the damaging or repair costs 332, and the damaging the cargo logistics services suffer from the impact 30 e.g., by measuring a delay time 333 or additional costs for rerouting 334. The cargo damaging may also be captured as loss of the cargo 34.

Parameter values for the impact strength 31, the impact type 32 and the quantified damage 33 may for example be received as geographical data, weather data, quality control data or other physically recorded data from existing technical measuring entities. Further, the quantified parameter values can be received as statistically determined physical data like average duration periods, average frequencies or average intensities. The data may for example be provided from known natural catastrophe evaluation services like a CatNet (Catastrophe Net) tool and/or other similar tools. For example, the CatNet tool (short for Catastrophe Network tool), provides an internet service offering users comprehensive information on natural hazards worldwide. CatNet enables users to gain a fast overview of natural perils by means of an electronic atlas. It provides easy access to up-to-date maps, showing the most relevant perils worldwide. The tool helps to evaluate the risks for any location on earth. CatNet is composed of an electronic atlas, country-specific insurance portfolio information and damage or loss event data. The tool can be used to provide parameter data for the impact strength 31, the impact type 32, the quantified damage 33 and the cargo loss 34 to the digital system 1. Of course, other tools providing data for the cargo and logistics characteristics can be used as a data source as well. The measuring entities or data tools can for example be connected to the digital system 1 by the data transmission network 70.

Further, data for parameter values may detected and transmitted by tracking devices 80 like RFID chips, telematic devices or GPS sensors installed at the cargo 10 for capturing at least partially the cargo and logistics parameters 11 and 42. For example, the tracking devices 80 collect data about the geo location of the cargo, the orientation of the cargo or the velocity of the cargo. The data can be transmitted via the data transmission network 70.

Each of the risk factors represents at least one of the parameters or parameter values quantifying the negative impact 30. As such the risk factors indicate the probability of an occurrence of a negative impact 30 defined by the impact characteristics as explained above. The risk factors are for example statistically derived from a data set of historical measurements of the impact characteristics. For example, the risk factors are determined by (1) generating a measurement series of parameter values of an impact characteristics of an impact event 30, i.e., of the impact strength 31, the impact type 32 and/or the quantified damage 33, for various locations and/or situations, and (2) statistically determining the likelihood for the impact event described by the characteristics to happen for the locations or situations for the measured parameter. Consequently, there may be more than one risk factor for each of the impact characteristics. For example, there is a series of impact strength risk factors 5231 comprising intensity risk factors 52311, duration risk factors 52312, and frequency risk factors 52313. Another example are risk factors 52321 for a natural catastrophe 321 event e.g., in form of storm impact risk factors 523211 or flood impact risk factors 523212. In the same way risk factors for other impact characteristics may be generated for the measured parameter values for the impact characteristics as there are for example labor disruption 322, regulatory discontinuation 323, etc. and/or downtime 331, repair costs 332, delay times 333, rerouting costs 334, etc. and any other measured impact parameters.

The risk factors 52 may be provided by a data tool as mentioned above or the risk factors 52 may for example be generated by a risk modelling structure 26 that may be part of the processing unit 20 or be associated to the risk factor database 50. The risk modelling structure 26 could also be a computer application implemented in the processing unit 20. The risk modelling structure 26 may also be part of the data tool. The risk modelling structure 26 can generate a risk factor for a measurable cargo logistics parameter based on the measured parameter values of the impact strength 31 and/or impact type 32, and/or a measured quantified damage 33. Advantageously, all available risk factors 52 for the various impact characteristics can be stored in the risk factor database 50 or for example can be hosted in a cloud storage space and provided via the data transmission network 70.

As mentioned above, the allocation structure 22 assigns at least one a risk factor 52 to at least one of the measurable cargo logistics parameter 11 of a set 13 of measurable cargo logistics parameters. Advantageously several measurable cargo logistics parameters 11 receive a corresponding risk factor 52, and ideally there is a risk factor 52 available for all of the measurable cargo logistics parameters 11 of a set 13 of measurable cargo logistics parameters, which risk factors 52 establish a set of risk factors 51. The aggregating structure 25 is configured to automatically generate the aggregated risk measure 60 as a risk summary factor based on the available risk factors allocated to the set 13 of measurable cargo logistics parameters 11. The aggregating structure 25 may comprise an algorithm to generate a mean, maximum, average or a summed up aggregated risk value. Weighting factors for the risk factors may be used for example to consider risk priorities. The aggregated risk measure provides comparable cargo logistics services risk information that can easily and quickly be accessed and provides added value to the cargo logistics services package.

In the variant of the digital system 1 illustrated in Figure 2 the processing unit 20 comprises an optimization structure 28 for optimizing the set 13 of measurable cargo logistics parameters for a cargo logistics services package to minimize the probability of the occurrence of a negative impact 30 for the selected cargo logistics parameters 11 of the cargo logistics service package. For example, the optimization structure 28 receives cargo characteristics and/or logistics characteristics selected by the logistics provider for a cargo logistics services package from the logistics input signal 400, wherein the cargo characteristics and/or logistics characteristics comprise alternatives that fulfill requirements of the services package. Further, the optimization structure 28 receives a set of risk factors 51 for one or more of the cargo and/or logistics characteristics from the risk factor database 50 for the characteristics alternatives. The optimization structure 28 e.g. selects the cargo logistics parameters 11 comprising the lowest risk factors 52 for each cargo and/or logistics characteristics and identifies the alternatives of the cargo logistics services parameters 11 associated with the lowest risk factors 52. It combines these lowest risk cargo logistics parameters to define the set of measurable cargo logistics parameters having the lowest risk aggregated risk measure 60 for the services package. Thus, the optimization structure finds the best available cargo parameters 11 and the best available logistics parameters 42 to create logistics services package that safely and reliably delivers the cargo 10 from A to B. The optimization structure 28 can for example be configured as a discrete or continuous optimization algorithm. The optimized set 13 of the measurable cargo logistics parameters 11 can be provided the extended output signal 610 to the logistics procurement platform 40 and serve as the basis for optimized insurance services.

Figure 3 illustrated a journey of a cargo owner shipping cargo from departure point A to destination point B, wherein a logistics provider uses a logistics procurement platform 40 and an implemented digital system 1 for applying the method for allocating and/or predicting risk measures for an occurrence of an impact event on cargo logistics services according to the invention. The logistic provider organizes intermodal transportation and related insurance through the logistics procurement platform 40 and the digital system 1. When the cargo owner places a purchasing order 700, the logistics provider gathers information about the requested logistics services and measurable cargo logistics parameters from the cargo owner and the logistics procurement platform 40. While the cargo gets ready for delivery the logistics provider provides an integrated offering 710 including a cargo logistics services package and an insurance offer to the cargo owner. The cargo logistics services package defines a set 13 of measurable cargo logistics parameters 11, which are provided to the digital system 1. The allocation structure 22 of the digital system 1 assigns a set of risk factors 51, received from the risk factor database 50, which set of risk factors 51 corresponds to the set 13 of measurable cargo logistics parameters 11. The aggregation structure 25 generates the aggregated risk measure 60, which serves as the basis for the insurance offer for the cargo logistics services package. In a next step trade financing 730 is guaranteed and transportation 740 is organized. Then the integrated offering 710 includes a quoting and binding step. In a confirmation step 750 the insurance policy 760 is issued and the transportation is confirmed. During the cargo logistics services the cargo is subject to end-to-end monitoring 770.

In case a negative impact on the cargo occurs a negative impact notification 780 is sent to the logistics procurement platform 40. The logistics procurement platform 40 registers claims connected to the negative impact and provides the claims for the digital system 1, which processes the claims in a claims management step 790 in a claims processing module 29 of the processing unit 20 or transmits claims information data to an external claims management application. Any type of invoicing 795 is processed by the logistics procurement platform 40 which includes premium collection for the insurance that is based on the aggregated risk measure 60 provided by the digital system 1 to assess the risk of an occurrence of an impact event causing a negative impact on the cargo logistics services package or the cargo.

In summary, the purchasing process for the cargo logistics services is simple and transparent, and is easily realized as an online service, which allows for checking availability checking and scheduling of the services. The digital quoting and booking step 720 can be done in real-time. The quoting of policy services and the issuance of the insurance policy 760 can happen immediately while invoicing and premium collection 795 is integrated in the process. Over all the effort for providing insurance quoting, issuance and premium collection is greatly reduced. The insurance service based on the aggregated risk measure 60 is customized to the needs of the cargo owner and the logistics provider, which reduces the risk of under-coverage and unnecessary high premiums. The digital system 1 and the associated method according to the invention simplify the all-in-one cargo logistics services handling and allow for accurate risk measuring of the cargo logistics services.

### List of reference signs

- A: Departure point
- B: Destination point
- 1: Digital system
- 2: Cargo owner
- 3: Logistics provider
- 10: Cargo
11 Measurable cargo logistics parameters
12 Cargo parameters
121 Cargo weight
122 Cargo size
123 Cargo fragility
124 Cargo value
13 Set of measurable cargo logistics parameters
- 20: Processing unit
21 Data interface to logistics procurement platform
22 Allocation structure
23 Data interface to risk factors database
24 Signal generator
25 Aggregating structure
26, 26' Risk modelling structure
27 Database
28 Optimization structure
- 30: Negative impact
31 Impact strength
311 Impact intensity
312 Impact duration
313 Impact frequency
32 Impact type
321 Natural catastrophe
322 Labor disruption
323 Regulatory discontinuation
33 Quantified damage
331 Down time
332 Repair costs
333 Delay time
334 Rerouting costs
34 Loss of cargo
- 40: Logistics procurement platform
41 Cargo logistics services database
42 Logistics parameters
421 Cargo packaging design
4211 Packaging material
4212 Packaging thickness
4213 Packaging quality
422 Departure location characteristics
4221 Geographical location
4222 Infrastructure connectivity
4223 Traffic volume
423 Destination characteristics
424 Transportation channel characteristics
4241 Length of route
4242 Number of transits
4243 Expected weather conditions
4244 Infrastructure conditions
425 Transportation means
4251 Transportation means type
4252 Fuel efficiency
4253 Age
426 Logistics formalities
4261 Type of regulatory process
4262 Number of regulatory processes
4263 Average processing time
43 Air transportation route
44 Sea transportation route
45 Land transportation route
- 50: Risk factor database
- 51: Set of risk factors
- 52: Risk factor
5231 Impact strength risk factors
52311 Intensity risk factor
52312 Duration risk factor
52313 Frequency risk factor
- 60: Aggregated risk measure
- 70: Data transmission network
71 Cellular mobile network
72 Satellite transmission line
- 100: Logistics input signal
- 500: Risk factor input signal
- 600: Output signal
610 Extended output signal
- 700: Purchasing order
710 Integrated offering
720 Quoting & binding step
730 Trade financing guaranteed
740 Transportation organized
750 Confirmation step
760 Insurance policy
770 End-to-end monitoring
780 Negative impact notification
790 Claims management step
795 Invoicing

## Claims

1. Method for a digital system (1) for predicting and measuring risk measures for an occurrence of an impact event impacting physical loss or damage (33) on cargo or cargo logistics services having an impact (30) with a measurable impact strength (31) related to an impact type (32) on the cargo (10) or the cargo logistics services, the impact strength (31) being quantified by measuring an impact severity or intensity (311) and an impact duration (312) and/or an impact frequency (313), **characterized**
**in that** sets (13) of measurable cargo logistics parameters (11) are captured by the system (1) as logistics input signals (400) from a cargo logistics services database (41) via a data interface (21) and transmitted to an allocation structure (22) of a processing unit (20), each set (13) of measurable cargo logistics parameters (11) at least comprising parameters (12) defining the cargo or parameters (42) or defining the logistics services, the set (13) of measurable cargo logistics parameters (11) at least comprises cargo parameter values capturing cargo characteristics including cargo weight (121) and/or cargo size (122) and/or cargo fragility (123) and/or cargo value (124), and logistics parameter values capturing logistics characteristics including cargo packaging design (421) and/or departure location characteristics (422) and/or destination location characteristics (423) and/or transportation channel characteristics (424) and/or transportation means (425), wherein the cargo and logistics parameters (11) are at least partially detected and transmitted by tracking devices (80) comprising RFID chips or telematic devices or GPS sensors installed at the cargo (10), the tracking devices (80) measuring parameter values for geo location of the cargo (10), the orientation of the cargo or the velocity of the cargo and transmitting them via a data transmission network (70) to the cargo logistics services database (41),
**in that** at least one risk factor (52) indicating a measured impact probability for the cargo (10) or the cargo logistics services is generated by a risk modelling structure (26) of the processing unit (20) based on at least the measured parameter values of the impact strength (31) and/or impact types (32) and/or measured quantified damages (33) and provided for the allocation structure (22) of the processing unit (20), each of the risk factors (52) at least corresponds to a measured impact strength (31) or impact type (32) of a negative impact (30) on the cargo (10) or the cargo logistics services, or a quantified damage (33) at the cargo (10) or on the cargo logistics services resulting from the impact (30), and
**in that** an aggregated risk measure (60) for the cargo or cargo logistics services is automatically generated by an aggregating structure (25) of the processing unit (20) based on the at least one risk factors (52) allocated to measurable cargo logistics parameters (11) of the set (13) of measurable cargo logistics parameters (11), and is provided as output signal (600) by a signal generator (24) to predict an occurrence of a measurable negative impact (30) on the cargo(10) and/or the cargo logistics services.

2. Method according to claim 1, **characterized in that** the aggregated risk measure (60) is assigned to the set (13) of measurable cargo logistics parameters (11) by the allocation structure (22) and provided as extended output signal (610) to the cargo logistics services database (41) by the signal generator (24) via a data interface (21).

3. Method according to claim 1 or 2, **characterized in that** at least one risk factor (52) is based on measurable risk parameters (311,..., 321,..., 331) indicating a damage in form of delay, damaging and/or loss of cargo, and/or in form of damaging of goods caused by the cargo logistics services.

4. Method according to one of the claims 1 to 3, **characterized in that** at least one risk factor (52) is based on measurable risk parameter values capturing a time of delay (333), a quantified damaging extend (33) and/or loss (34) of the cargo (10), and/or a quantified damaging extend of goods caused by the cargo logistics services.

5. Method according to one of the claims 1 to 4, **characterized in that** a risk factor (52) for an associated cargo logistics parameter (12, 42) is established by measuring the physical impact strength (31) or impact type (32) of impact events on the cargo (10) and/or the cargo logistics services affected by the impact event, measuring the impact strength on the cargo or the cargo logistics services, measuring a damage (33) of the cargo (10) and/or the cargo logistics services caused by the impact event, and/or quantifying a probability of impact occurrence.

6. Method according to one of the claims 1 to 5, **characterized in that** cargo logistics services include cargo handling, packaging, transportation, tracking, delivery and/or insuring, and/or logistics quoting, booking, scheduling, alerting, controlling and/or processing cargo formalities.

7. Method according to one of the claims 1 to 6, **characterized in that** the aggregated risk measure (60) is determined based on historical measures of risk parameter values for one or more cargo logistics parameters (12, 42) defining the cargo logistic services, wherein the output signal (400) is indicative of the aggregated risk measure (60) for the cargo logistic services in respect to the set (13) of measured values for the cargo logistics parameters (11).

8. Method according to one of the claims 1 to 7, **characterized in that** the aggregated risk measure (60) is generated by the aggregating structure (25) and allocated to the set (13) of measurable cargo logistics parameters (11), the aggregated risk measure (60) providing an aggregated impact probability measure value for the cargo logistics services to be involved in one or more impact events having a negative impact (30) with a measurable impact strength (31) and/or impact type (32).

9. Method according to one of the claims 1 to 8, **characterized in that** the processing unit (20) and/or the risk factor database (50) include a damage or risk modelling structure (26; 26') generating a risk factor (52) for a measurable cargo logistics parameter (11) based on a measured impact strength (31) and/or impact type (32), and/or a measured quantified damage (33).

10. Method according to one of the claims 1 to 9, **characterized in that** the allocation structure (22) assigns a risk factor (52) to a measurable cargo logistics parameter (11) by:
receiving a measurable cargo logistics services parameter (11) defining the cargo logistics services or the cargo (10) from the cargo logistics services database (41) via the logistics input signal (400),
selecting at least one risk factor (52) provided by the risk factor database (50) via the risk input signal (500) for an at least similar cargo logistics parameter (12, 42) indicating a damage probability measure based on past measured damages caused by past measured impact events related to the cargo logistics parameter (12, 42) and/or generated by a risk modelling structure (26, 26') for a measurable impact event, and
allocating the at least one risk factor (52) to the measured cargo logistics services parameter (11) defining the cargo logistics services.

11. Method according to one of the claims 1 to 10, **characterized in that** an aggregated loss risk measure indicating a loss of the cargo by the cargo logistics services is generated based on the risk factors (34) associated to the measured cargo logistics services parameter by the aggregating structure (22).

12. Method according to one of the claims 1 to 11, **characterized in that** an optimization structure (28) of the processing unit (20) optimizes the set (13) of measurable cargo logistics parameters (11) for a cargo logistics service to minimize the probability of the occurrence of an impact event on the cargo logistic service indicated by the aggregated risk measure (60).

13. Method according to one of the claims 1 to 12, **characterized in that** an optimization structure (28) of the processing unit (20) receives cargo logistics services characteristics from the logistics input signal (400) and a set of risk factors (51 ) for one or more of the cargo logistics services characteristics from the risk factor database (50), wherein the optimization structure (28) selects the cargo logistics parameter (12, 42) comprising the lowest risk factor (52) for each cargo logistics services characteristic, and combines the lowest risk cargo logistics parameters (12, 42) to define the set (13) of measurable cargo logistics parameters (11).

14. Method according to claim 13, **characterized in that** the lowest risk factor (52) is defined by a lowest physical impact strength (31) of impact events on the cargo (10) and/or the cargo logistics services affected by the impact event, a lowest impact strength (31) on the cargo (10) or the cargo logistics services, a lowest damage of the cargo (10) and/or the cargo logistics services caused by the impact event, and/or a lowest probability of impact occurrence.

15. Method according to one of the claims 1 to 14, **characterized in that** the aggregation structure (25) and/or the optimization structure (28) may be combined with an artificial intelligence structure comprising a machine learning algorithm.

16. Digital system (1) for predicting and measuring risk measures for an occurrence of an impact event on cargo logistics services causing a negative impact (30) with a measurable impact strength (31) related to an impact type (32) on the cargo (10) or the cargo logistics services, the impact strength (31) being quantified by measuring an impact severity or intensity (311) and an impact duration (312) and/or an impact frequency (313), **characterized**
**in that** the system (1) comprises a processing unit (20) and at least one data interface (21) associated with data access means to a cargo logistics services database (41) for capturing sets (13) of measurable cargo logistics parameters (11) as logistics input signals (400) from the cargo logistics services database (41), wherein sets (13) of measurable cargo logistics parameters (11) are transmitted to an allocation structure (22) of the processing unit (20), each set (13) of measurable cargo logistics parameters (11) at least comprising parameters (12) defining the cargo or parameters (42) defining the cargo logistics services, the set (13) of measurable cargo logistics parameters (11) at least comprises cargo parameter values capturing cargo characteristics including cargo weight (121) and/or cargo size (122) and/or cargo fragility (123) and/or cargo value (124), and logistics parameter values capturing logistics characteristics including cargo packaging design (421) and/or departure location characteristics (422) and/or destination location characteristics (423) and/or transportation channel characteristics (424) and/or transportation means (425), wherein the cargo and logistics parameters (11) are at least partially detected and transmitted by tracking devices (80) comprising RFID chips or telematic devices or GPS sensors installed at the cargo (10), the tracking devices (80) measuring parameter values for geo location of the cargo (10), the orientation of the cargo or the velocity of the cargo and transmitting them via a data transmission network (70) to the cargo logistics services database (41),
**in that** the processing unit (20) comprises a risk modelling structure (26) for generating at least one risk factor (52) indicating a measured impact probability for the cargo (10) or the cargo logistics services and for providing the at least one risk factor (52) to the allocation structure (22) of the processing unit (20), each of the risk factors (52) at least corresponds to a measured impact strength (31) or impact type (32) of a negative impact (30) on the cargo (10) or the cargo logistics services, or a quantified damage (33) at the cargo (10) or on the cargo logistics services resulting from the impact (30), wherein at least one measurable cargo logistics parameter (11) of a set (13) of measurable cargo logistics parameters (11) is assigned a risk factor (52) by the allocation structure (22) ) that corresponds to a measured value of the measurable cargo logistics parameters (11), and
**in that** the system (1) comprises a signal generator (24) and an aggregating structure (25) for automatically generating an aggregated risk measure (60) for the cargo (10) and the cargo logistics services based on the risk factors (52) allocated to measurable cargo logistics parameters (11) of the set (13) of measurable cargo logistics parameters (11), wherein the aggregated risk measure (60) is provided as output signal (600) by the signal generator (24) to predict an occurrence of a measurable negative impact on the cargo (10) and/or the cargo logistics services.

17. System according to claim 16, **characterized in that** the cargo logistics services database (41) and/or the risk factor database (50) comprise a persistent data storage storing data representing the measurable cargo logistics services parameters (11) and/or representing the risk factors (52).

## Patentansprüche

1. Verfahren für ein digitales System (1) zur Vorhersage und Messung von Risikomaßnahmen für das Auftreten eines Aufprallereignisses, das sich auf physische Verluste oder Schäden (33) an Fracht oder Frachtlogistikdienstleistungen auswirkt und einen Aufprall (30) mit einer messbaren Aufprallstärke (31) aufweist, die sich auf eine Aufprallart (32) auf die Fracht (10) oder die Frachtlogistikdienste bezieht, wobei die Aufprallstärke (31) durch Messen einer Aufprallschwere oder -intensität (311) und einer Aufpralldauer (312) und/oder einer Aufprallhäufigkeit (313) quantifiziert wird, **dadurch gekennzeichnet**
**dass** Sätze (13) messbarer Frachtlogistikparameter (11) vom System (1) als Logistikeingangssignale (400) aus einer Frachtlogistikdienstleistungsdatenbank (41) über eine Datenschnittstelle (21) erfasst und an eine Zuordnungsstruktur (22) einer Verarbeitungseinheit (20) übertragen werden, wobei jeder Satz (13) messbarer Frachtlogistikparameter (11) mindestens Parameter (12) beinhaltet, welche die Fracht definieren, oder Parameter (42), welche die Frachtlogistikdienstleistungen definieren, wobei der Satz (13) messbarer Frachtlogistikparameter (11) mindestens Frachtparameterwerte beinhaltet, die Frachteigenschaften erfassen, einschließlich Frachtgewicht (121) und/oder Frachtgröße (122) und/oder Frachtzerbrechlichkeit (123) und/oder den Frachtwert (124) erfassen, und Logistikparameterwerte, die Logistikmerkmale erfassen, einschließlich das Frachtverpackungsdesign (421) und/oder Abfahrtsortmerkmale (422) und/oder Zielortmerkmale (423) und/oder Transportkanalmerkmale (424) und/oder Transportmittel (425) beinhalten, wobei die Fracht- und Logistikparameter (11) zumindest teilweise von Trackinggeräten (80) erfasst und übertragen werden, die RFID-Chips oder Telematikgeräte oder GPS-Sensoren umfassen, die an der Fracht (10) installiert sind, wobei die Trackinggeräte (80) Parameterwerte für den geografischen Standort der Fracht (10), die Ausrichtung der Fracht oder die Geschwindigkeit der Fracht messen und diese über ein Datenübertragungsnetzwerk (70) an die Frachtlogistikdienstleistungendatenbank (41) übertragen,
**dass** mindestens ein Risikofaktor (52), der eine gemessene Aufprallwahrscheinlichkeit für die Fracht (10) oder der Frachtlogistikdienstleistungen, von einer Risikomodellierungsstruktur (26) der Verarbeitungseinheit (20) auf der Grundlage zumindest der gemessenen Parameterwerte der Aufprallstärke (31) und/oder der Aufprallarten (32) und/oder der gemessenen quantifizierten Schäden (33) generiert und für die Zuordnungsstruktur (22) der Verarbeitungseinheit (20) bereitgestellt wird, jeder der Risikofaktoren (52) mindestens einer gemessenen Aufprallstärke (31) oder einem Aufpralltyp (32) eines negativen Aufpralls (30) auf die Fracht (10) oder die Frachtlogistikdienstleistungen oder einem quantifizierten Schaden (33) an der Fracht (10) oder an den Frachtlogistikdienstleistungen, der aus dem Aufprall (30) resultiert, entspricht, und
**dass** eine aggregierte Risikomaßnahme (60) für die Fracht oder die Frachtlogistikdienstleistungen automatisch von einer Aggregationsstruktur (25) der Verarbeitungseinheit (20) auf der Grundlage der mindestens einen Risikofaktoren (52) erzeugt wird, die messbaren Frachtlogistikparametern (11) des Satzes (13) messbarer Frachtlogistikparameter (11) zugeordnet sind, und als Ausgangssignal (600) von einem Signalgenerator (24) bereitgestellt wird, um das Auftreten einer messbaren negativen Auswirkung (30) auf die Fracht (10) und/oder die Frachtlogistikdienstleistungen vorherzusagen.

2. Verfahren nach Anspruch 1, **dadurch gekennzeichnet, dass** das aggregierte Risikomaßnahme (60) durch die Zuordnungsstruktur (22) dem Satz (13) messbarer Frachtlogistikparameter (11) zugeordnet und durch den Signalgenerator (24) über eine Datenschnittstelle (21) als erweitertes Ausgangssignal (610) an die Frachtlogistikdienstleistungendatenbank (41) bereitgestellt wird.

3. Verfahren nach Anspruch 1 oder 2, **dadurch gekennzeichnet, dass** mindestens ein Risikofaktor (52) auf der Grundlage messbarer Risikoparameter (311, ..., 321, ..., 331) basiert, die einen Schaden in Form von Verspätung, Beschädigung und/oder Verlust von Fracht und/oder in Form von Beschädigung von Gütern durch die Frachtlogistikdienstleistungen anzeigen.

4. Verfahren nach einem der Ansprüche 1 bis 3, **dadurch gekennzeichnet, dass** mindestens ein Risikofaktor (52) auf der Grundlage messbarer Risikoparameterwerte basiert, die eine Verzögerungszeit (333), ein quantifiziertes Ausmaß der Beschädigung (33) und/oder des Verlusts (34) der Fracht (10) und/oder ein quantifiziertes Ausmaß der Beschädigung von Gütern erfassen, die durch die Frachtlogistikdienstleistungen verursacht wurden.

5. Verfahren nach einem der Ansprüche 1 bis 4, **dadurch gekennzeichnet, dass** ein Risikofaktor (52) für einen zugehörigen Frachtlogistikparameter (12, 42) durch Messen der physikalischen Aufprallstärke (31) oder der Art der Einwirkung (32) von Einwirkungsereignissen auf die Fracht (10) und/oder die von dem Einwirkungsereignis betroffenen Frachtlogistikdienstleistungen, durch Messen der Einwirkungsstärke auf die Fracht oder die Frachtlogistikdienstleistungen, durch Messen eines Schadens (33) der Fracht (10) und/oder der Frachtlogistikdienstleistungen, der durch das Einwirkungsereignis verursacht wurde, und/oder durch Quantifizieren einer Wahrscheinlichkeit des Auftretens einer Einwirkung ermittelt wird.

6. Verfahren nach einem der Ansprüche 1 bis 5, **dadurch gekennzeichnet, dass** die Frachtlogistikdienstleistungen die Frachtabfertigung, Verpackung, Beförderung, Verfolgung, Zustellung und/oder Versicherung und/oder Logistikangebotserstellung, Buchung, Terminplanung, Benachrichtigung, Kontrolle und/oder Abwicklung von Frachtformalitäten beinhalten.

7. Verfahren nach einem der Ansprüche 1 bis 6, **dadurch gekennzeichnet, dass** das aggregierte Risikomaß (60) auf der Grundlage historischer Messungen von Risikoparameterwerten für einen oder mehrere Frachtlogistikparameter (12, 42) bestimmt wird, welche die Frachtlogistikdienstleistungen definieren, wobei das Ausgangssignal (400) die aggregierte Risikomaßnahme (60) für die Frachtlogistikdienstleistungen in Bezug auf den Satz (13) von Messwerten für die Frachtlogistikparameter (11) angibt.

8. Verfahren nach einem der Ansprüche 1 bis 7, **dadurch gekennzeichnet, dass** die aggregierte Risikomaßnahme (60) von der Aggregationsstruktur (25) generiert und dem Satz (13) messbarer Frachtlogistikparameter (11) zugeordnet wird, wobei das aggregierte Risikomaßnahme (60) einen aggregierten Wert für die Auswirkungswahrscheinlichkeit der Frachtlogistikdienstleistungen liefert, die von einem oder mehreren Ereignissen mit negativen Auswirkungen (30) mit einer messbaren Auswirkungsstärke (31) und/oder Auswirkungsart (32) betroffen sein könnten.

9. Verfahren nach einem der Ansprüche 1 bis 8, **dadurch gekennzeichnet, dass** die Verarbeitungseinheit (20) und/oder die Risikofaktordatenbank (50) eine Schadens- oder Risikomodellierungsstruktur beinhalten (26; 26') umfasst, die einen Risikofaktor (52) für einen messbaren Frachtlogistikparameter (11) auf der Grundlage einer gemessenen Aufprallstärke (31) und/oder eines gemessenen Aufpralltyps (32) und/oder eines gemessenen quantifizierten Schadens (33) generiert.

10. Verfahren nach einem der Ansprüche 1 bis 9, **dadurch gekennzeichnet, dass** die Zuordnungsstruktur (22) einem messbaren Frachtlogistikparameter (11) einen Risikofaktor (52) zuweist, indem sie:
Empfang eines messbaren Frachtlogistikdienstleistungsparameters (11), der die Frachtlogistikdienstleistungen oder die Fracht (10) definiert, aus der Frachtlogistikdienstleistungsdatenbank (41) über die Logistikeingangssignale (400),
Auswählen mindestens eines Risikofaktors (52), der von der Risikofaktordatenbank (50) über das Risikosignal (500) für einen zumindest ähnlichen Frachtlogistikparameter (12, 42) bereitgestellt wird, der ein Schadenswahrscheinlichkeitsmaß auf der Grundlage von in der Vergangenheit gemessenen Schäden angibt, die durch in der Vergangenheit gemessene Aufprallereignisse im Zusammenhang mit dem Frachtlogistikparameter (12, 42) verursacht und/oder durch eine Risikomodellierungsstruktur (26, 26') für ein messbares Aufprallereignis, und
Zuweisen des mindestens einen Risikofaktors (52) zu dem gemessenen Frachtlogistikdienstleistungsparameter (11), der die Frachtlogistikdienstleistungen definiert.

11. Verfahren nach einem der Ansprüche 1 bis 10, **dadurch gekennzeichnet, dass** ein aggregiertes Verlustrisikomaß, das einen Verlust der Güter durch die Frachtlogistikdienstleistungen anzeigt, auf der Grundlage der Risikofaktoren (34) erzeugt wird, die mit dem gemessenen Frachtlogistikdienstparameter durch die Aggregationsstruktur (22) verbunden sind.

12. Verfahren nach einem der Ansprüche 1 bis 11, **dadurch gekennzeichnet, dass** eine Optimierungsstruktur (28) der Verarbeitungseinheit (20) den Satz (13) messbarer Frachtlogistikparameter (11) für eine Frachtlogistikdienstleistung optimiert, um die Wahrscheinlichkeit des Auftretens eines durch das aggregierte Risikomaß (60) angezeigten Aufprallereignisses mit Auswirkungen auf die Frachtlogistikdienstleistung zu minimieren.

13. Verfahren nach einem der Ansprüche 1 bis 12, **dadurch gekennzeichnet, dass** eine Optimierungsstruktur (28) der Verarbeitungseinheit (20) Frachtlogistikdienstleistungen aus den Logistikeingangssignalen (400) und einen Satz von Risikofaktoren (51) für eines oder mehrere der Frachtlogistikdienstleistungen aus der Risikofaktordatenbank (50) empfängt, wobei die Optimierungsstruktur (28) den Frachtlogistikparameter (12, 42) auswählt, der den niedrigsten Risikofaktor (52) für jede Frachtlogistikdienstleistung umfasst, und die Frachtlogistikparameter mit dem niedrigsten Risiko (12, 42) kombiniert, um den Satz (13) messbarer Frachtlogistikparameter (11) zu definieren.

14. Verfahren nach Anspruch 13, **dadurch gekennzeichnet, dass** der niedrigste Risikofaktor (52) durch eine niedrigste physikalische Aufprallfestigkeit (31) von Aufprallereignissen auf die Fracht (10) und/oder die vom Aufprallereignis betroffenen Frachtlogistikdienstleistungen, einer geringsten Aufprallstärke (31) auf die Fracht (10) oder die Frachtlogistikdienstleistungen, einem geringsten Schaden der Fracht (10) und/oder der Frachtlogistikdienstleistungen, der durch das Aufprallereignis verursacht wird, und/oder einer geringsten Wahrscheinlichkeit des Auftretens eines Aufpralls.

15. Verfahren nach einem der Ansprüche 1 bis 14, **dadurch gekennzeichnet, dass** die Aggregationsstruktur (25) und/oder die Optimierungsstruktur (28) mit einer künstlichen Intelligenzstruktur kombiniert werden kann, die einen Algorithmus für maschinelles Lernen umfasst.

16. Digitales System (1) zur Vorhersage und Messung von Risikomaßnahmen für das Auftreten eines Aufprallereignisses bei Frachtlogistikdienstleistungen, das negative Auswirkungen (30) mit einer messbaren Aufprallstärke (31) in Bezug auf eine Aufprallart (32) auf die Fracht (10) oder die Frachtlogistikdienstleistungen verursacht, wobei die Aufprallstärke (31) durch Messung einer Aufprallschwere oder -intensität (311) und einer Aufpralldauer (312) und/oder einer Aufprallfrequenz (313) quantifiziert wird, **dadurch gekennzeichnet**
**dass** das System (1) eine Verarbeitungseinheit (20) und mindestens eine Datenschnitstelle (21) umfasst, die mit Datenzugriffsmitteln auf eine Frachtlogistikdienstleistungsdatenbank (41) verbunden ist, um Sätze (13) messbarer Frachtlogistikparameter (11) als Logistik-Eingangssignale (400) aus der Frachtlogistikdienstleistungsdatenbank (41) erfasst werden, wobei Sätze (13) messbarer Frachtlogistikparameter (11) an eine Zuordnungsstruktur (22) der Verarbeitungseinheit (20) übertragen werden, wobei jeder Satz (13) messbarer Frachtlogistikparameter (11) mindestens Parameter (12) umfasst, welche die Fracht definieren, oder Parameter (42), welche die Frachtlogistikdienstleistungen definieren, wobei der Satz (13) messbarer Frachtlogistikparameter (11) mindestens Frachtparameterwerte umfasst, die Frachteigenschaften erfassen, einschließlich Frachtgewicht (121) und/oder Frachtgröße (122) und/oder Frachtzerbrechlichkeit (123) und/oder Frachtwert (124), sowie Logistikparameterwerte, die Logistikeigenschaften erfassen, einschließlich Frachtverpackungsdesign (421) und/oder Abfahrtsortsmerkmale (422) und/oder Zielortmerkmale (423) und/oder Transportkanalmerkmale (424) und/oder Transportmittel (425) erfassen, wobei die Frachtlogistikparameter (11) zumindest teilweise von Trackinggeräten (80) erfasst und übertragen werden, die RFID-Chips oder Telematikgeräte oder GPS-Sensoren umfassen, die an der Fracht (10) installiert sind, wobei die Trackinggeräte (80) Parameterwerte für den geografischen Standort der Fracht (10), die Ausrichtung der Fracht oder die Geschwindigkeit der Fracht messen und diese über ein Datenübertragungsnetzwerk (70) an die Frachtlogistikdienstleistungen-Datenbank (41) übertragen,
**dass** die Verarbeitungseinheit (20) eine Risikomodellierungsstruktur (26) umfasst, um mindestens einen Risikofaktor (52) zu generieren, der eine gemessene Aufprallwahrscheinlichkeit für die Fracht (10) oder die Frachtlogistikdienstleistungen angibt, und um den mindestens einen Risikofaktor (52) der Zuordnungsstruktur (22) der Verarbeitungseinheit (20) zur Verfügung zu stellen, wobei jeder der Risikofaktoren (52) mindestens einer gemessenen Aufprallstärke (31) oder einem gemessenen Aufpralltyp (32) eines negativen Aufpralls (30) auf die Fracht (10) oder die Frachtlogistikdienstleistungen oder einem quantifizierten Schaden (33) an der Fracht (10) oder an den Frachtlogistikdienstleistungen, der aus dem Aufprall (30) resultiert, entspricht, wobei mindestens einem messbaren Frachtlogistikparameter (11) aus einem Satz (13) messbarer Frachtlogistikparameter (11) durch die Zuordnungsstruktur (22) ein Risikofaktor (52) zugeordnet wird, der einem Messwert der messbaren Frachtlogistikparameter (11) entspricht, und
**dass** das System (1) einen Signalgenerator (24) und eine Aggregationsstruktur (25) umfasst, um automatisch eine aggregierte Risikomaßnahme (60) für die Fracht (10) und die Frachtlogistikdienstleistungen auf der Grundlage der Risikofaktoren (52) zu generieren, die den messbaren Frachtlogistikparametern (11) des Satzes (13) messbarer Frachtlogistikparameter (11) zugewiesen sind, wobei die aggregierte Risikomaßnahme (60) vom Signalgenerator (24) als Ausgangssignal (600) bereitgestellt wird, um das Auftreten einer messbaren negativen Auswirkung auf die Fracht (10) und/oder die Frachtlogistikdienstleistungen vorherzusagen.

17. System nach Anspruch 16, **dadurch gekennzeichnet, dass** die Frachtlogistikdienstleistungsdatenbank (41) und/oder die Risikofaktordatenbank (50) einen persistenten Datenspeicher umfassen, der Daten speichert, welche die messbaren Frachtlogistikdienstleistungsparameter (11) und/oder die Risikofaktoren (52) darstellen.

## Revendications

1. Procédé pour un système numérique (1) destiné à prédire et à mesurer des mesures de risque pour la survenue d'un événement d'impact ayant un effet sur la perte ou l'endommagement physique (33) de marchandises ou de services logistiques de transport de marchandises ayant un impact (30) avec une force d'impact mesurable (31) liée à un type d'impact (32) sur les marchandises (10) ou les services logistiques de transport de marchandises, la force d'impact (31) étant quantifiée en mesurant la gravité ou l'intensité de l'impact (311) et la durée de l'impact (312) et/ou la fréquence de l'impact (313), **caractérisé**
**en ce que** des ensembles (13) de paramètres logistiques de cargaison mesurables (11) sont capturés par le système (1) en tant que signaux d'entrée logistiques (400) à partir d'une base de données de services logistiques de fret (41) via une interface de données (21) et transmis à une structure d'allocation (22) d'une unité de traitement (20), chaque ensemble (13) de paramètres logistiques de cargaison mesurables (11) comprenant au moins des paramètres (12) définissant le fret ou des paramètres (42) ou définissant les services logistiques, l'ensemble (13) de paramètres logistiques de fret mesurables (11) comprenant au moins des valeurs de paramètres de fret capturant les caractéristiques du fret, y compris le poids du fret (121) et/ou la taille du fret (122) et/ou la fragilité du fret (123) et/ou la valeur de la cargaison (124), et des valeurs de paramètres logistiques capturant les caractéristiques logistiques, notamment la conception de l'emballage de la cargaison (421) et/ou les caractéristiques du lieu de départ (422) et/ou les caractéristiques du lieu de destination (423) et/ou les caractéristiques du canal de transport (424) et/ou les moyens de transport (425), dans lequel les paramètres de cargaison et logistiques (11) sont au moins partiellement détectés et transmis par des dispositifs de suivi (80) comprenant des puces RFID ou des dispositifs télématiques ou des capteurs GPS installés sur la cargaison (10), les dispositifs de suivi (80) mesurant les valeurs des paramètres pour la géolocalisation de la cargaison (10), l'orientation de la cargaison ou la vitesse de la cargaison et les transmettant via un réseau de transmission de données (70) à la base de données des services logistiques de la cargaison (41),
**en ce qu'**au moins un facteur de risque (52) indiquant une probabilité d'impact mesurée pour la cargaison (10) ou des services logistiques de cargaison est généré par une structure de modélisation des risques (26) de l'unité de traitement (20) sur la base d'au moins les valeurs de paramètres mesurées de la force d'impact (31) et/ou des types d'impact (32) et/ou des dommages quantifiés mesurés (33) et fournis à la structure d'allocation (22) de l'unité de traitement (20), chacun des facteurs de risque (52) correspond au moins à une force d'impact mesurée (31) ou à un type d'impact mesuré (32) d'un impact négatif (30) sur la cargaison (10) ou les services logistiques de la cargaison, ou à un dommage quantifié (33) sur la cargaison (10) ou sur les services logistiques de la cargaison résultant de l'impact (30), et
**en ce qu'**une mesure de risque agrégée (60) pour la cargaison ou les services logistiques de cargaison est générée automatiquement par une structure d'agrégation (25) de l'unité de traitement (20) sur la base d'au moins un facteur de risque (52) attribué à des paramètres logistiques de cargaison mesurables (11) de l'ensemble (13) de paramètres logistiques de cargaison mesurables (11), et est fournie en tant que signal de sortie (600) par un générateur de signaux (24) afin de prédire la survenue d'un impact négatif mesurable (30) sur la cargaison (10) et/ou les services logistiques liés à la cargaison.

2. Procédé selon la revendication 1, **caractérisé en ce que** la mesure de risque agrégée (60) est attribuée à l'ensemble (13) de paramètres logistiques de cargaison mesurables (11) par la structure d'attribution (22) et fournie en tant que signal de sortie étendu (610) à la base de données de services logistiques de cargaison (41) par le générateur de signaux (24) via une interface de données (21).

3. Procédé selon la revendication 1 ou 2, **caractérisé en ce qu'**au moins un facteur de risque (52) est basé sur des paramètres de risque mesurables (311, ..., 321, ..., 331) indiquant un dommage sous forme de retard, d'endommagement et/ou de perte de cargaison, et/ou sous forme d'endommagement de marchandises causé par les services logistiques de cargaison.

4. Procédé selon l'une des revendications 1 à 3, **caractérisé en ce qu'**au moins un facteur de risque (52) est basé sur des valeurs de paramètres de risque mesurables capturant un temps de retard (333), une étendue quantifiée des dommages (33) et/ou une perte (34) de la cargaison (10), et/ou une étendue quantifiée des dommages causés aux marchandises par les services logistiques de cargaison.

5. Procédé selon l'une des revendications 1 à 4, **caractérisé en ce qu'**un facteur de risque (52) pour un paramètre logistique de cargaison associé (12, 42) est établi en mesurant la force d'impact physique (31) ou le type d'impact (32) des événements d'impact sur la cargaison (10) et/ou les services logistiques de transport de marchandises affectés par l'événement d'impact, en mesurant la force d'impact sur la cargaison ou les services logistiques de transport de marchandises, en mesurant un dommage (33) de la cargaison (10) et/ou des services logistiques de transport de marchandises causé par l'événement d'impact, et/ou en quantifiant une probabilité de survenue d'un impact.

6. Procédé selon l'une des revendications 1 à 5, **caractérisé en ce que** les services logistiques de cargaison comprennent la manutention, l'emballage, le transport, le suivi, la livraison et/ou l'assurance du fret, et/ou la cotation, la réservation, la planification, l'alerte, le contrôle et/ou le traitement des formalités de cargaison.

7. Procédé selon l'une des revendications 1 à 6, **caractérisé en ce que** la mesure de risque agrégée (60) est déterminée sur la base de mesures historiques des valeurs des paramètres de risque pour un ou plusieurs paramètres logistiques de cargaison (12, 42) définissant les services logistiques de cargaison, dans lequel le signal de sortie (400) est indicatif de la mesure de risque agrégée (60) pour les services logistiques de cargaison par rapport à l'ensemble (13) de valeurs mesurées pour les paramètres logistiques de cargaison (11).

8. Procédé selon l'une des revendications 1 à 7, **caractérisé en ce que** la mesure de risque agrégée (60) est générée par la structure d'agrégation (25) et attribuée à l'ensemble (13) de paramètres logistiques de cargaison mesurables (11), la mesure de risque agrégée (60) fournissant une valeur de mesure de probabilité d'impact agrégée pour les services logistiques de cargaison susceptibles d'être impliqués dans un ou plusieurs événements ayant un impact négatif (30) avec une force d'impact mesurable (31) et/ou un type d'impact (32).

9. Procédé selon l'une des revendications 1 à 8, **caractérisé en ce que** l'unité de traitement (20) et/ou la base de données de facteurs de risque (50) comprennent une structure de modélisation des dommages ou des risques (26 ; 26') générant un facteur de risque (52) pour un paramètre logistique de cargaison mesurable (11) sur la base d'une force d'impact mesurée (31) et/ou d'un type d'impact mesuré (32), et/ou d'un dommage quantifié mesuré (33).

10. Procédé selon l'une des revendications 1 à 9, **caractérisé en ce que** la structure d'attribution (22) attribue un facteur de risque (52) à un paramètre logistique de cargaison mesurable (11) en :
recevant un paramètre de services logistiques de cargaison mesurable (11) définissant les services logistiques de cargaison ou le cargaison (10) à partir de la base de données de services logistiques de cargaison (41) via le signal d'entrée logistique (400),
sélectionner au moins un facteur de risque (52) fourni par la base de données de facteurs de risque (50) via le signal d'entrée de risque (500) pour un paramètre logistique de cargaison au moins similaire (12, 42) indiquant une mesure de probabilité de dommage basée sur des dommages mesurés passés causés par des événements d'impact mesurés passés liés au paramètre logistique de cargaison (12, 42) et/ou générés par une structure de modélisation des risques (26, 26') pour un événement d'impact mesurable, et
attribuer le au moins un facteur de risque (52) au paramètre de services logistiques de cargaison mesuré (11) définissant les services logistiques de cargaison.

11. Procédé selon l'une des revendications 1 à 10, **caractérisé en ce qu'**une mesure agrégée du risque de perte indiquant une perte de la cargaison par les services logistiques de cargaison est générée sur la base des facteurs de risque (34) associés au paramètre mesuré des services logistiques de cargaison par la structure d'agrégation (22).

12. Procédé selon l'une des revendications 1 à 11, **caractérisé en ce qu'**une structure d'optimisation (28) de l'unité de traitement (20) optimise l'ensemble (13) de paramètres logistiques de cargaison mesurables (11) pour un service logistique de cargaison afin de minimiser la probabilité de survenue d'un événement d'un impact sur le service logistique de cargaison indiqué par la mesure de risque agrégée (60).

13. Procédé selon l'une des revendications 1 à 12, **caractérisé en ce qu'**une structure d'optimisation (28) de l'unité de traitement (20) reçoit des caractéristiques de services logistiques de cargaison à partir du signal d'entrée logistique (400) et un ensemble de facteurs de risque (51) pour une ou plusieurs caractéristiques de services logistiques de cargaison à partir de la base de données de facteurs de risque (50), dans lequel la structure d'optimisation (28) sélectionne le paramètre logistique de cargaison (12, 42) comprenant le facteur de risque le plus faible (52) pour chaque caractéristique des services logistiques de cargaison, et combine les paramètres logistiques de cargaison à risque le plus faible (12, 42) pour définir l'ensemble (13) de paramètres logistiques de cargaison mesurables (11).

14. Procédé selon la revendication 13, **caractérisé en ce que** le facteur de risque le plus faible (52) est défini par une résistance physique à l'impact la plus faible (31) des événements d'impact sur la cargaison (10) et/ou les services logistiques de cargaison affectés par l'événement d'impact, une résistance aux chocs la plus faible (31) sur la cargaison (10) ou les services logistiques de cargaison, un dommage le plus faible de la cargaison (10) et/ou des services logistiques de cargaison causé par l'événement de choc, et/ou une probabilité la plus faible de survenue d'un choc.

15. Procédé selon l'une des revendications 1 à 14, **caractérisé en ce que** la structure d'agrégation (25) et/ou la structure d'optimisation (28) peuvent être combinées avec une structure d'intelligence artificielle comprenant un algorithme d'apprentissage automatique.

16. Système numérique (1) pour prédire et mesurer des mesures de risque pour la survenue d'un événement d'impact sur des services logistiques de cargaison causant un impact négatif (30) avec une force d'impact mesurable (31) liée à un type d'impact (32) sur la cargaison (10) ou les services logistiques de cargaison, la force d'impact (31) étant quantifiée en mesurant une gravité ou une intensité d'impact (311) et une durée d'impact (312) et/ou une fréquence d'impact (313), **caractérisé**
**en ce que** le système (1) comprend une unité de traitement (20) et au moins une interface de données (21) associée à des moyens d'accès aux données d'une base de données de services logistiques de cargaison (41) pour capturer des ensembles (13) de paramètres logistiques de cargaison mesurables (11) en tant que signaux d'entrée logistiques (400) à partir de la base de données de services logistiques de cargaison (41), dans lequel des ensembles (13) de paramètres logistiques de cargaison mesurables (11) sont transmis à une structure d'allocation (22) de l'unité de traitement (20), chaque ensemble (13) de paramètres logistiques de cargaison mesurables (11) comprenant au moins des paramètres (12) définissant la cargaison ou des paramètres (42) définissant les services logistiques de cargaison, l'ensemble (13) de paramètres logistiques de cargaison mesurables (11) comprenant au moins des valeurs de paramètres de cargaison capturant les caractéristiques de cargaison, y compris le poids de cargaison (121) et/ou la taille de cargaison (122) et/ou la fragilité de cargaison (123) et/ou la valeur de cargaison (124), et des valeurs de paramètres logistiques capturant les caractéristiques logistiques, y compris la conception de l'emballage de cargaison (421) et/ou les caractéristiques du lieu de départ (422) et/ou les caractéristiques du lieu de destination (423) et/ou les caractéristiques du canal de transport (424) et/ou les moyens de transport (425), dans lequel les paramètres de cargaison et logistiques (11) sont au moins partiellement détectés et transmis par des dispositifs de suivi (80) comprenant des puces RFID ou des dispositifs télématiques ou des capteurs GPS installés sur la cargaison (10), les dispositifs de suivi (80) mesurant les valeurs des paramètres pour la géolocalisation de la cargaison (10), l'orientation de la cargaison ou la vitesse de la cargaison et les transmettant via un réseau de transmission de données (70) à la base de données des services logistiques de la cargaison (41),
dans lequel l'unité de traitement (20) comprend une structure de modélisation des risques (26) pour générer au moins un facteur de risque (52) indiquant une probabilité d'impact mesurée pour la cargaison (10) ou les services logistiques de la cargaison et pour fournir le au moins un facteur de risque (52) à la structure d'allocation (22) de l'unité de traitement (20), chacun des facteurs de risque (52) correspond au moins à une force d'impact mesurée (31) ou à un type d'impact (32) d'un impact négatif (30) sur la cargaison (10) ou les services logistiques de la cargaison, ou à un dommage quantifié (33) sur la cargaison (10) ou sur les services logistiques de la cargaison résultant de l'impact (30), dans lequel au moins un paramètre logistique de cargaison mesurable (11) d'un ensemble (13) de paramètres logistiques de cargaison mesurables (11) se voit attribuer un facteur de risque (52) par la structure d'attribution (22) qui correspond à une valeur mesurée des paramètres logistiques de cargaison mesurables (11), et
**en ce que** le système (1) comprend un générateur de signaux (24) et une structure d'agrégation (25) pour générer automatiquement une mesure de risque agrégée (60) pour la cargaison (10) et les services logistiques liés à la cargaison sur la base des facteurs de risque (52) attribués aux paramètres logistiques mesurables liés à la cargaison (11) de l'ensemble (13) de paramètres logistiques mesurables liés à la cargaison (11), dans lequel la mesure de risque agrégée (60) est fournie en tant que signal de sortie (600) par le générateur de signaux (24) afin de prédire la survenue d'un impact négatif mesurable sur la cargaison (10) et/ou les services logistiques de cargaison.

17. Système selon la revendication 16, **caractérisé en ce que** la base de données de services logistiques de cargaison (41) et/ou la base de données de facteurs de risque (50) comprennent un stockage de données persistant stockant des données représentant les paramètres mesurables des services logistiques de cargaison (11) et/ou représentant les facteurs de risque (52).
